# EUROPEAN PATENT APPLICATION

(11) **EP 3 620 646 A1**
(43) Date of publication of application: **11.03.2020**
(21) Application number: 18275141.2
(22) Date of filing: 06.09.2018
(51) Int. Cl.: F02K 9/42, B64G 1/40, F03H 1/00

(54) **A PROPELLANT**

(71) Applicant: Airbus Defence and Space Limited, Stevenage Hertfordshire SG1 2AS (GB)
(72) Inventor: Sadler, James Edward, Stevenage, Hertfordshire SG1 2AS (GB); Giannetti, Vittorio, Stevenage, Hertfordshire SG1 2AS (GB); Gray, Howard, Stevenage, Hertfordshire SG1 2AS (GB)
(74) Representative: Newcombe, Christopher David

(57) **Abstract**

The present invention relates to a propellant for an electrical spacecraft propulsion system, wherein the propellant has an ionisation energy of less than 20 eV and a density at ambient conditions of greater than 600 kg/m³, and wherein the propellant is a liquid at an operational temperature of 0 to 75 °C and an operational pressure range of 2 to 25 bar. The present invention also relates to a propulsion system for a spacecraft, the use of an interhalogen compound as a propellant for an electrical propulsion system and a method of providing a propellant to an electrical propulsion engine (6).

## Description

### Field of the Invention

The present invention relates generally to propellants for electrical spacecraft propulsion systems and to propulsion systems for a spacecraft.

### Background

A propellant may be described as a substance which is used to generate thrust acting on a spacecraft and can be stored in a spacecraft as either a solid, liquid or gas.

Electrical propulsion systems are well known and include electrostatic engines, such as ion thrusters which rely on the Coulomb force for acceleration, and electromagnetic engines which rely on the Lorentz force, or the effect of an electromagnetic field, to accelerate ions.

Generally, noble gases, such as xenon, are used as propellants in electrical propulsion systems.

There remains a need for a cheap, stable, and readily available propellant for use in an electrical propulsion system.

### Summary of the Invention

According to a first aspect of the invention, there is provided a propellant for an electrical spacecraft propulsion system, wherein the propellant has an ionisation energy of less than 20 eV and a density at ambient conditions of greater than 600 kg/m³.

In some embodiments, the propellant is a liquid at an operational temperature of 0 to 75 °C.

In some embodiments, the propellant is a liquid at an operational pressure of 2 to 25 bar.

In some embodiments, the propellant is an interhalogen compound.

In some embodiments, the interhalogen compound is iodine monobromide or iodine monochloride.

According to a second aspect of the invention, there is provided a propulsion system for a spacecraft comprising: at least one electrical propulsion engine; at least one tank to store a propellant; and a liquid feed system configured to deliver the propellant from the tank to the at least one electrical propulsion engine.

In some embodiments, the propellant is stored in the tank as a liquid.

In some embodiments, the propellant is stored in the tank as a solid.

In some embodiments, the propulsion system further comprises a pressurant system comprising a pressurant gas.

In some embodiments, the pressurant gas is an inert gas.

In some embodiments, the inert gas is fed directly to a neutraliser of the at least one electrical propulsion engine.

In some embodiments, the neutraliser is a hollow cathode.

In some embodiments, the propellant is fed directly into the electrical propulsion engine.

In some embodiments, the propulsion system further comprises an evaporator located between the tank and the electrical propulsion engine.

In some embodiments, the propulsion system further comprises at least one high thrust propulsion engine selected from the list consisting of: a cold gas thruster, a resistojet or an arcjet.

In some embodiments, the pressurant gas is fed directly into the at least one high thrust propulsion engine.

In some embodiments, the propellant has an ionisation energy of less than 20 eV and a density at ambient conditions of greater than 600 kg/m³.

In some embodiments, the propellant is a liquid at an operational temperature of 0 to 75 °C.

In some embodiments, the propellant is a liquid at an operational pressure of 2 to 25 bar.

In some embodiments, the propellant is an interhalogen compound.

In some embodiments, the interhalogen compound is iodine monobromide or iodine monochloride.

According to a third aspect of the invention, there is provided use of an interhalogen compound as a propellant for an electrical propulsion system of a spacecraft.

According to a fourth aspect of the invention, there is provided a method of providing a propellant to an electrical propulsion engine in a spacecraft, wherein the propellant is an interhalogen compound.

### Brief Description of the Drawings

Embodiments of the present invention will now be described, by way of example, with reference to the accompanying drawings, in which:
Fig. 1 is a diagram of a propulsion system according to a first embodiment.
Fig. 2 is a diagram of a propulsion system according to a second embodiment.

### Detailed Description

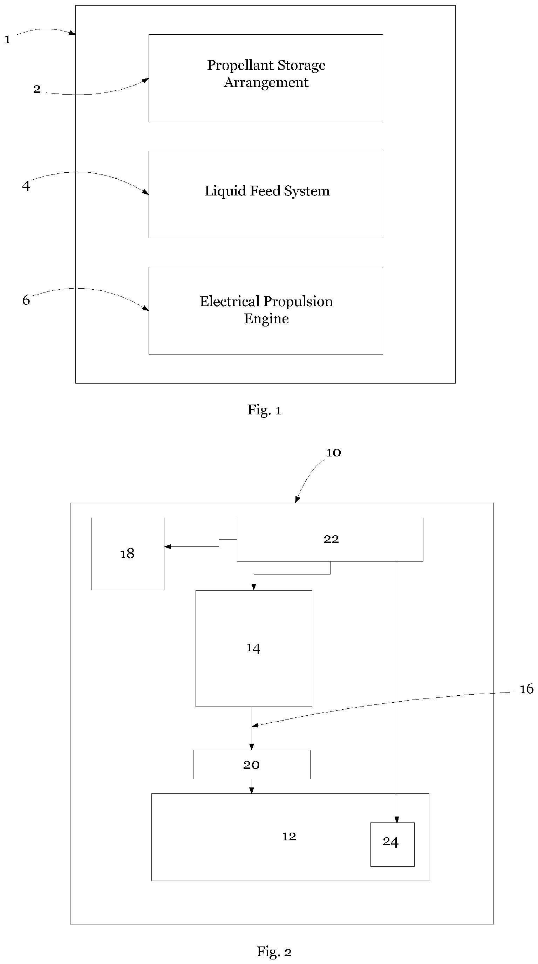

A propulsion system 1, as shown in Fig. 1, includes an electrical propulsion engine 6, a liquid feed system4, and a propellant storage arrangement 2.

The electrical propulsion engine is configured to generate thrust with high Iₛₚ by converting electrical energy into kinetic energy. The electrical propulsion engine comprises at least one electric thruster configured to accelerate ions or plasma using an electric, magnetic or electro-magnetic field. In this way, the electrical propulsion engine generates thrust acting on the spacecraft. Electrical propulsion engines also generally include one or more neutralisers. For example, electrical propulsion engines may comprise a cathode neutraliser, such as a hollow cathode.

In some embodiments, the electrical propulsion engine may comprise an electrostatic propulsion engine. Electrostatic propulsion engines, such as ion thrusters, rely on the Coulomb force for acceleration. In other embodiments, the electrical propulsion engine may comprise an electromagnetic propulsion engine. Electromagnetic propulsion engines rely on the Lorentz force, or the effect of an electromagnetic field, to accelerate ions. Alternatively, the electrical propulsion engine may be described as an engine which accelerates ions and therefore requires ionisation.

Suitable electrostatic and electromagnetic engines include: Hall thrusters, gridded ion engines, ion engines, radiofrequency ion engines, magnetoplasma dynamic thrusters, colloid thrusters, field-emission electric propulsion (FEEP), helicon double layer thrusters, high efficiency multistage plasma thruster (HEMPT), variable specific impulse magnetoplasma rocket (VASMIR), vacuum arc thrusters, RF thrusters, and microwave thrusters. The use of electrostatic and electromagnetic thrusters allows for stronger benefits in terms of achievable Iₛₚ and thus system performance.

Electrothermal engines, such as arcjets and resistojets are suitable for use with the pressurant gas described herein.

In some embodiments, the electrical engine has a minimum Iₛₚ of about 500 seconds and a maximum thrust of about 1 N.

As depicted in Fig. 1, the propulsion system comprises a liquid feed system. A liquid feed system may alternatively be described as a liquid chemical feed system. A liquid feed system is configured to deliver a liquid propellant from the propellant storage arrangement to the electrical propulsion engine.

Generally, chemical propulsion engines rely on a liquid feed system and therefore the feed system employed with an electrical prolusion engine may be a modified known liquid feed system previously used with a chemical propulsion engine. The liquid feed system may comprise pipework, connectors, and valves arranged in order to deliver liquid propellant from the propellant storage arrangement to the electrical propulsion engine. The propellant storage arrangement may be, for example, a propellant tank configured to store a liquid propellant.

In some embodiments, the liquid feed system comprises an evaporator and a mass flow controller. An evaporator is configured to evaporate the liquid propellant into a gas and the mass flow controller is configured to provide a consistent flow of gaseous propellant into the electrical propulsion engine.

In some embodiments, the propellant has an ionisation energy of less than 20 eV and a density at ambient conditions of greater than 600 kg/m³. Such propellants represent a high performance, low temperature, high density, cheap propellant for use in an electrical propulsion engine where a low cost, high Iₛₚ system is required.

In some embodiments, the ionisation energy is less than 18 eV, less than 15 eV, less than 12 eV, or less than 10 eV. In some embodiments, the common propellant has an ionisation energy between 8 and 10 eV.

In some embodiments, the density is greater than 650 kg/m³, greater than 700 kg/m³, or greater than 750 kg/m³.

The ambient temperature may be the ambient temperature of a spacecraft in normal operating conditions. In some embodiments, the ambient temperature is between about 0 and about 75 °C.

In some embodiments, the propellant is a liquid at an operational temperature of 0 to 75 °C, for example a liquid at a temperature of 25 to 75 °C.

In some embodiments, the propellant is a liquid at an operational pressure of about 2 to about 310 bar, for example 2 to 100 bar, 2 to 50 bar or 2 to 25 bar.

A propellant which is a liquid at operational temperature and pressures is advantageous because no special thermal controls are required in order to maintain the propellant in liquid form. This reduces cost and the complexity of the propulsion system.

In some embodiments, the propellant is a solid at operating conditions of between about 0 and about 35 °C and between about 2 to about 25 bar. When the propellant is a solid at operating conditions, the propulsion system may additionally comprise a heater in order to melt the propellant, generating a liquid propellant for feeding into the electrical propulsion engine via the liquid feed system. A propellant which is a solid at operating conditions may be beneficial for imaging spacecraft because sloshing of the propellant, which may negatively affect image quality, is minimised.

In some embodiments, the propellant is a solid at launch conditions. For example, the propellant may be a solid between a temperature of about 10 °C and about 30 °C and a pressure of about 4 bar to about 20 bar. A propellant which is a solid at launch temperature is advantageous because it minimises potential sloshing of the propellant during take-off, providing a more stable launch. Furthermore, a solid propellant can be stored at minimal pressure and allows the spacecraft to be transported to the launch site loaded, minimising cost.

In some embodiments, the propellant is an interhalogen compound. As interhalogen compounds are typically denser than current propellants, such as xenon, spacecraft are able to make use of smaller tanks, decreasing mass and therefore launch cost.

In some embodiments, the propellant is iodine monobromide (IBr) or iodine monochloride (ICl). IBr and ICl are both more readily available than xenon and may be purchased for a fraction of the cost of xenon. In addition, these propellants can be produced by numerous industries and therefore the price will not fluctuate in a similar fashion to xenon.

In some embodiments, the propellant is fed directly into the electrical propulsion engine. The propellant may be fed directly into the electrical engine in order to vapourise on contact with the anode or gas distributor. When the propellant is fed directly into the electrical propulsion engine, the system complexity is reduced as an evaporator and a mass flow controller are not required. This will also reduce the cost and mass of the propulsion system.

A propulsion system 10 for a spacecraft is shown in Fig. 2. The propulsion system 10 includes an electrical propulsion engine 12, a propellant tank 14 comprising a propellant and a liquid feed system 16 configured to deliver the propellant from the tank 14 to the electrical propulsion engine 12. The electrical propulsion engine 12 further comprises a neutraliser 24. The propulsion system 10 additionally comprises an evaporator and a mass flow controller 20, a pressurant gas system 22, and a high thrust propulsion engine 18.

The electrical propulsion engine 12, the propellant tank 14, and the liquid feed system 16 operate substantially as described with respect to Figure 1.

The evaporator and the mass flow controller 20 are located between the propellant tank 14 and the electrical propulsion engine 12. Alternatively, the liquid propellant may be fed directly into the electrical engine in order to vapourise on contact with the anode or the gas distributor, as described above, and the evaporator and mass flow controller may not be required.

The pressurant gas system 22 is configured to pressurise the propellant tank 14, such that a liquid propellant is forced out of the propellant tank through the liquid feed system 16.

The pressurant gas system 22 comprises a pressurant. For example, the pressurant may be an inert gas. An inert gas is a gas which is generally unreactive with other substances. In other words, an inert gas is a non-reactive gas. Inert gases can include both elemental gases, such as noble gases, and molecular gases. Examples of inert gases include helium, neon, argon, krypton, xenon, and nitrogen. Preferably, the inert gas is helium or argon.

The pressurant gas is delivered under pressure to the propellant tank 14. In this way, the pressurant gas system may control the pressure in the propellant tank 14. By using an inert gas as the pressurant gas, the pressurant gas does not react with the liquid propellant.

In some embodiments, the propulsion system including the pressurant gas system 22 is a pressure regulated system, a repressurising system or a blowdown system.

Preferably, the propulsion system is pressure regulated.

In some embodiments, the propellant may be self-pressurised. When a self-pressurised system is employed, the internal pressure of the propellant tank is sufficient to pass propellant through the liquid feed system. A self-pressurised system is advantageous because a pressurant system is not required, reducing cost and mass.

In some embodiments, the pressurant gas system may also feed pressurant gas directly to the neutraliser 24 located within the electrical propulsion engine 12. Such a configuration minimises the modifications required to existing electrical propulsion engines and additionally minimises any potential neutraliser compatibility issues.

Typically, the most sensitive component of an electrical propulsion engine is the cathode. Degradation of the cathode may decrease the efficiency of the electrical propulsion engine or may even prevent the engine from operating entirely. Common materials employed in an emitter located within the cathode are only compatible with certain specific chemicals, such as xenon, and are easily degraded if incompatible chemicals are used.

Feeding a pressurant gas, such as helium or argon, directly to the neutraliser of the electrical propulsion engine eliminates potential degradation of the anode and cathode. This allows the use of a propellant which is relatively cheap, readily available, and "green", i.e. environmentally friendly. In addition, a greater variety of cathode and anode materials may be employed. Materials previously considered incompatible as a cathode or anode may be integrated in the propulsion system according to the present invention.

In some embodiments, the spacecraft propulsion system additionally comprises the high thrust propulsion engine 18. In particular, the spacecraft propulsion system may comprise a cold gas thruster, through which the pressurant gas may be passed to generate high thrust. The high thrust propulsion engine 18 may be connected directly to the pressurant gas system 22 such that the pressurant gas may be passed directly from the pressurant gas system 22 into the high thrust propulsion engine 18.

Alternatively, the high thrust engine 18 may be described as an engine which generates high thrust without any chemical combustion taking place.

In some embodiments, the pressurant gas system will be maintained at a high pressure throughout its lifetime in order to provide any necessary end of life thrust from a cold gas thruster.

In some embodiments, the high thrust engine has a maximum Iₛₚ of about 200 seconds and a minimum thrust of about 0.15 N.

In this way, the propulsion system can be provided with a high thrust capability without requiring, for example, a separate chemical propulsion system and a further propellant storage arrangement associated with the chemical propulsion system. The chemical propulsion engine 18 allows the propulsion system to perform high thrust manoeuvers, such short duration attitude control manoeuvers including de-tumbling and safe mode acquisition.

### Clauses

The following clauses describe embodiments of the invention. They are not claims.
1. A propellant for an electrical spacecraft propulsion system, wherein the propellant has an ionisation energy of less than 20 eV and a density at ambient conditions of greater than 600 kg/m³.
2. The propellant according to clause 1, wherein the propellant is a liquid at an operational temperature of 0 to 75 °C.
3. The propellant according to clause 1 or clause 2, wherein the propellant is a liquid at an operational pressure of 2 to 25 bar.
4. The propellant according to any one of clauses 1 to 3, wherein the propellant is an interhalogen compound.
5. The propellant according to clause 4, wherein the interhalogen compound is iodine monobromide or iodine monochloride.
6. A propulsion system for a spacecraft comprising:
   at least one electrical propulsion engine;
   at least one tank to store a propellant; and
   a liquid feed system configured to deliver the propellant from the tank to the at least one electrical propulsion engine.
7. The propulsion system according to clause 6, wherein the propellant is stored in the tank as a liquid.
8. The propulsion system according to clause 6, wherein the propellant is stored in the tank as a solid.
9. The propulsion system according to any one of clauses 6 to 8, further comprising a pressurant system comprising a pressurant gas.
10. The propulsion system according to clause 9, wherein the pressurant gas is an inert gas.
11. The propulsion system according to clause 10, wherein the inert gas is fed directly to a neutraliser of the at least one electrical propulsion engine.
12. The propulsion system according to clause 11, wherein the neutraliser is a hollow cathode.
13. The propulsion system according to any one of clauses 6 to 10, wherein the propellant is fed directly into the electrical propulsion engine.
14. The propulsion system according to any one of clauses 6 to 12, further comprising an evaporator located between the tank and the electrical propulsion engine.
15. The propulsion system according to any one of clauses 6 to 14, further comprising at least one high thrust propulsion engine selected from the list consisting of: a cold gas thruster, a resistojet or an arcjet.
16. The propulsion system according to clause 15, wherein the pressurant gas is fed directly into the at least one high thrust propulsion engine.
17. The propulsion system according to any one of clauses 6 to 16, wherein the propellant has an ionisation energy of less than 20 eV and a density at ambient conditions of greater than 600 kg/m³.
18. The propulsion system according to clause 17, wherein the propellant is a liquid at an operational temperature of 0 to 75 °C.
19. The propulsion system according to clause 17 or clause 18, wherein the propellant is a liquid at an operational pressure of 2 to 25 bar.
20. The propulsion system according to any one of clauses 17 to 19, wherein the propellant is an interhalogen compound.
21. The propulsion system according to clause 20, wherein the interhalogen compound is iodine monobromide or iodine monochloride.
22. Use of an interhalogen compound as a propellant for an electrical propulsion system of a spacecraft.
23. A method of providing a propellant to an electrical propulsion engine in a spacecraft, wherein the propellant is an interhalogen compound.

Although embodiments of the present invention have been shown and described, it will be appreciated by those skilled in the art that changes may be made in these embodiments without departing from the invention, the scope of which is defined in the appended claims. Various components of different embodiments may be combined where the principles underlying the embodiments are compatible.

## Claims

1. A propellant for an electrical spacecraft propulsion system, wherein the propellant has an ionisation energy of less than 20 eV and a density at ambient conditions of greater than 600 kg/m³, and wherein the propellant is a liquid at an operational temperature of 0 to 75 °C and an operational pressure range of 2 to 25 bar.

2. The propellant according to claim 1, wherein the propellant is an interhalogen compound such as iodine monobromide or iodine monochloride.

3. A propulsion system for a spacecraft comprising:
at least one electrical propulsion engine;
at least one tank to store a propellant; and
a liquid feed system configured to deliver the propellant from the tank to the at least one electrical propulsion engine.

4. The propulsion system according to claim 3, wherein the propellant is stored in the tank as a liquid.

5. The propulsion system according to claim 3, wherein the propellant is stored in the tank as a solid.

6. The propulsion system according to any one of claims 3 to 5, further comprising a pressurant system comprising a pressurant gas, such as inert gas, such as helium, neon, argon, krypton, xenon, and nitrogen, which is fed directly to a neutraliser of the at least one electrical propulsion engine.

7. The propulsion system according to claim 6, wherein the neutraliser is a hollow cathode.

8. The propulsion system according to any one of claims 3 to 7, wherein the propellant is fed directly into the electrical propulsion engine.

9. The propulsion system according to any one of claims 3 to 8, further comprising an evaporator located between the tank and the electrical propulsion engine.

10. The propulsion system according to any one of claims 3 to 9, further comprising at least one high thrust propulsion engine selected from the list consisting of: a cold gas thruster, a resistojet or an arcjet, wherein the pressurant gas is fed directly into the at least one high thrust propulsion engine.

11. The propulsion system according to any one of claims 3 to 10, wherein the propellant has an ionisation energy of less than 20 eV and a density at ambient conditions of greater than 600 kg/m³, and wherein the propellant is a liquid at an operational temperature of 0 to 75 °C and an operational pressure of 2 to 25 bar.

12. The propulsion system according to any one of claims 3 to 11, wherein the propellant is an interhalogen compound, such as iodine monobromide or iodine monochloride.

13. Use of an interhalogen compound as a propellant for an electrical propulsion system of a spacecraft.

14. A method of providing a propellant to an electrical propulsion engine in a spacecraft, wherein the propellant is an interhalogen compound.
